# EUROPEAN PATENT APPLICATION

(11) **EP 4 513 808 A1**
(43) Date of publication of application: **26.02.2025**
(21) Application number: 23791312.4
(22) Date of filing: 20.04.2023
(51) Int. Cl.: H04L 5/00

(54) **INFORMATION TRANSMISSION METHOD AND APPARATUS AND COMMUNICATION DEVICE**

(30) Priority: 20.04.2022 CN 202210420816
(71) Applicant: Datang Mobile Communications Equipment Co., Ltd., Beijing 100085 (CN)
(72) Inventor: ZHANG, Yinghao, Beijing 100085 (CN); CHENG, Fangchen, Beijing 100085 (CN); WANG, Jiaqing, Beijing 100085 (CN); YANG, Meiying, Beijing 100085 (CN)
(74) Representative: Studio Torta S.p.A.
(86) International application number: PCT/CN2023/089452
(87) International publication number: WO 2023/202659

(57) **Abstract**

The present disclosure provides an information transmission method and device and a communication device. The method in embodiments of the present disclosure includes: transmitting, by a sending node, a target signal. The target signal is used to indicate at least one of the following: first identifier information of the sending node; or, usage-related information of the target signal.

## Description

### CROSS-REFERENCE TO RELATED APPLICATION

The present disclosure is filed based on and claims the priority of Chinese Application No. 202210420816.4 filed on April 20, 2022, the disclosure of which are incorporated in their entireties by reference herein.

### TECHNICAL FIELD

The present disclosure relates to the field of communication technologies, and in particular to an information transmission method, device and communication device.

### BACKGROUND

The existing new radio (NR) system has designed physical channels and physical signals with different functions according to its own needs, which is consistent with the existing NR system architecture. But for future communication systems, not only traditional base stations, but also mobile nodes or terminal devices with communication modules may serve as network access points for end-to-end communication for users, and such network architecture is very flexible. The reference signals and physical channels in the existing NR systems cannot adapt to the future communication system architecture.

### SUMMARY

An object of the present disclosure provides an information transmission method, device and communication device, which can solve the problem that reference signals and physical channels in the existing NR system cannot adapt to the future communication system architecture.

In order to achieve the above object, the present disclosure provides an information transmission method, including:
transmitting, by a sending node, a target signal, wherein the target signal is used to indicate at least one of the following:
first identifier information of the sending node; or,
usage-related information of the target signal.

Optionally, the target signal carries first information, or the target signal carries the first information and second information; wherein the first information is used to indicate the first identifier information of the sending node, and the second information is used to indicate the usage-related information of the target signal.

Optionally, the first information includes part information of the first identifier information, or the first information includes all information of the first identifier information;
the first identifier information is used to indicate at least one of location information, node type or service type of the sending node.

Optionally, each sending node corresponds to unique first identifier information.

Optionally, the first identifier includes a plurality of second identifiers, and the second identifiers include at least one of the following:
national-level identifier;
region-level identifier;
local-level identifier;
individual-level identifier;
service-level identifier.

Optionally, the target signal is used to identify the sending node and/or used for radio channel measurement.

Optionally, the second information includes at least one of the following:
access request information used to request access to a receiving node;
node switching indication information used to indicate the sending node or the receiving node to switch an access node;
service type information used to indicate a service type of the sending node; or,
radio resource reservation information used to indicate radio resources reserved by the sending node or radio resources allocated to the receiving node.

Optionally, before the transmitting, by a sending node, a target signal, the method further includes:
determining a transmission resource of the target signal according to pre-configuration information, wherein the pre-configuration information includes at least one of a transmission cycle or a cycle offset value;
wherein transmission resources corresponding to different sending nodes do not overlap.

The present disclosure further provides an information transmission method, including:
receiving, by a receiving node, a target signal transmitted by at least one sending node, wherein the target signal is used to indicate at least one of the following:
first identifier information of the sending node; or,
usage-related information of the target signal.

Optionally, the target signal carries first information, or the target signal carries the first information and second information; wherein the first information is used to indicate the first identifier information of the sending node, and the second information is used to indicate the usage-related information of the target signal.

Optionally, the first information includes part information of the first identifier information, or the first information includes all information of the first identifier information;
the first identifier information is used to indicate at least one of location information, node type or service type of the sending node.

Optionally, each sending node corresponds to unique first identifier information.

Optionally, the first identifier includes a plurality of second identifiers, and the second identifiers include at least one of the following:
national-level identifier;
region-level identifier;
local-level identifier;
individual-level identifier;
service-level identifier.

Optionally, after the receiving, by a receiving node, a target signal transmitted by at least one sending node, the method further includes:
identifying, by the receiving node, the sending node and/or performing, by the receiving node, radio channel measurement, according to the target signal.

Optionally, the second information includes at least one of the following:
access request information used to request access to the receiving node;
node switching indication information used to indicate the sending node or the receiving node to switch an access node;
service type information used to indicate a service type of the sending node; or,
radio resource reservation information used to indicate radio resources reserved by the sending node or radio resources allocated to the receiving node.

Optionally, after the receiving, by a receiving node, a target signal transmitted by at least one sending node, the method further includes:
according to the second information, perform at least one of the following:
performing access processing on the sending node;
determining that the sending node switches an access node;
determining a service type of the sending node; or,
determining radio resources reserved by the sending node or radio resources allocated to the receiving node.

The present disclosure further provides an information transmission device, applied to a sending node, including: a memory, a transceiver, and a processor;
wherein the memory is used to store a computer program; the transceiver is used to send and receive data under control of the processor; the processor is used to read the computer program in the memory and perform the following operations:
transmitting a target signal through the transceiver, wherein the target signal is used to indicate at least one of the following:
first identifier information of the sending node; or,
usage-related information of the target signal.

Optionally, the target signal carries first information, or the target signal carries the first information and second information; wherein the first information is used to indicate the first identifier information of the sending node, and the second information is used to indicate the usage-related information of the target signal.

Optionally, the target signal is used to identify the sending node and/or used for radio channel measurement.

Optionally, the second information includes at least one of the following:
access request information used to request access to a receiving node;
node switching indication information used to indicate the sending node or the receiving node to switch an access node;
service type information used to indicate a service type of the sending node; or,
radio resource reservation information used to indicate radio resources reserved by the sending node or radio resources allocated to the receiving node.

One embodiment of the present disclosure further provides an information transmission device, applied to a receiving node, including: a memory, a transceiver, and a processor;
wherein the memory is used to store a computer program; the transceiver is used to send and receive data under control of the processor; the processor is used to read the computer program in the memory and perform the following operations:
receiving, through the transceiver, a target signal transmitted by at least one sending node, wherein the target signal is used to indicate at least one of the following:
first identifier information of the sending node; or,
usage-related information of the target signal.

Optionally, the target signal carries first information, or the target signal carries the first information and second information; wherein the first information is used to indicate the first identifier information of the sending node, and the second information is used to indicate the usage-related information of the target signal.

Optionally, the processor executes the computer program in the memory to perform the following steps:
identifying the sending node and/or performing radio channel measurement, according to the target signal.

Optionally, the second information includes at least one of the following:
access request information used to request access to the receiving node;
node switching indication information used to indicate the sending node or the receiving node to switch an access node;
service type information used to indicate a service type of the sending node; or,
radio resource reservation information used to indicate radio resources reserved by the sending node or radio resources allocated to the receiving node.

Optionally, the processor executes the computer program in the memory to perform the following steps:
according to the second information, perform at least one of the following:
performing access processing on the sending node;
determining that the sending node switches an access node;
determining a service type of the sending node; or,
determining radio resources reserved by the sending node or radio resources allocated to the receiving node.

One embodiment of the present disclosure further provides an information transmission device, applied to a sending node, including:
a first transmission unit used to transmit a target signal, wherein the target signal is used to indicate at least one of the following:
first identifier information of the sending node; or,
usage-related information of the target signal.

One embodiment of the present disclosure further provides an information transmission device, applied to a receiving node, including:
a first receiving unit used to receive a target signal transmitted by at least one sending node, wherein the target signal is used to indicate at least one of the following:
first identifier information of the sending node; or,
usage-related information of the target signal.

One embodiment of the present disclosure further provides a processor-readable storage medium, including: program instructions stored thereon; wherein the program instructions are used to cause a processor to perform steps of the above information transmission method.

The above technical solution in the present disclosure has at least the following beneficial effects.

In the embodiment of the present disclosure, the sending node transmits a target signal to the receiving node. The target signal can indicate the first identifier information of the sending node. The receiving node can perform radio channel measurement based on the first identifier information of the sending node; the above target signal can also indicate usage-related information of the target signal, such as indicating access request information and indicating radio resource reservation information. That is, the target signal can realize the function of carrying certain information. That is to say, in the embodiment of the present disclosure, the above target signal can realize the function of a reference signal (that is, the function of performing radio channel measurement) or the function of a physical channel (that is, the function of carrying certain information). Content carried by the target signal can be flexibly set according to different usage requirements, so that it can be applied to flexible network architecture.

### BRIEF DESCRIPTION OF THE DRAWINGS

In order to more clearly illustrate the technical solutions in the embodiments of the present disclosure or related art, the drawings needed to be used in the description of the embodiments or related art will be briefly introduced hereinafter. Obviously, the drawings described below are only some embodiments described in the present disclosure. For those of ordinary skill in the art, other drawings can be obtained based on these drawings without creative effort.
FIG. 1 shows a schematic diagram of an applicable network system according to an embodiment of the present disclosure;
FIG. 2 shows a first schematic flowchart of an information transmission method according to an embodiment of the present disclosure;
FIG. 3 shows a first schematic diagram of a target signal according to an embodiment of the present disclosure;
FIG. 4 shows a second schematic diagram of a target signal according to an embodiment of the present disclosure;
FIG. 5 shows a schematic diagram of target signals sent by different access points according to an embodiment of the present disclosure;
FIG. 6 shows a second schematic flowchart of an information transmission method according to an embodiment of the present disclosure;
FIG. 7 shows a first schematic diagram of an information transmission device according to an embodiment of the present disclosure;
FIG. 8 shows a second schematic diagram of an information transmission device according to an embodiment of the present disclosure;
FIG. 9 shows a first schematic diagram showing modules of an information transmission device according to an embodiment of the present disclosure; and
FIG. 10 shows a second schematic diagram showing modules of an information transmission device according to an embodiment of the present disclosure.

### DETAILED DESCRIPTION

The technical solution of the embodiment of the present disclosure may be applied to various systems, especially a 5G system. For example, applicable systems may be Global System of Mobile communication (GSM) system, Code Division Multiple Access (CDMA) system, Wideband Code Division Multiple Access (WCDMA) system, Time Division Synchronous Code Division Multiple Access (TD-SCDMA) system, General Packet Radio Service (GPRS) system, Long Term Evolution (LTE) system (including TD-LTE and FDD LTE), Long Term Evolution Advanced (LTE-A) system, Universal Mobile Telecommunication System (UMTS), Worldwide Interoperability for Microwave Access (WiMAX) system, or 5th-Generation (5G) New Radio (NR) system. Each of these systems includes a terminal device and a network device. Each system further includes a core network part, e.g., an Evolved Packet System (EPS) or 5G system (5GS/5GC).

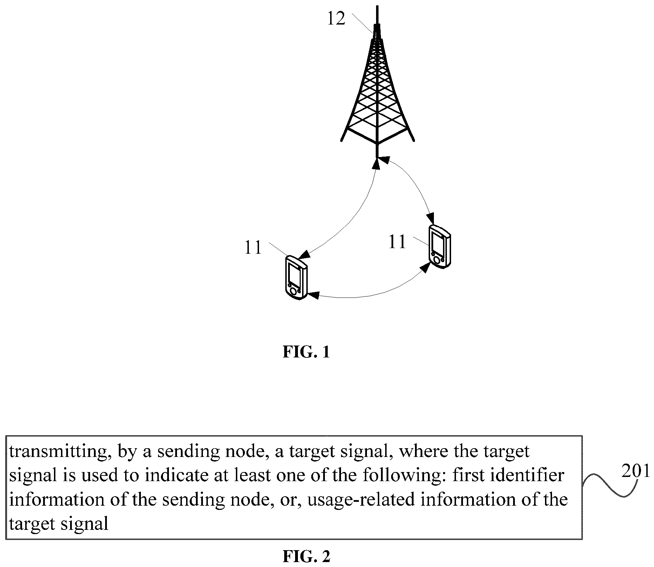

FIG. 1 shows a schematic diagram of an applicable network system according to an embodiment of the present disclosure. The wireless communication system includes a terminal 11 and a network device 12. The terminal 11 may also be called a terminal device or a user terminal (UE). The terminal 11 may be a terminal-side device, such as a mobile phone, a tablet computer, a laptop computer which is also referred as a notebook computer, a personal digital assistant (PDA), handheld computer, netbook, ultra-mobile personal computer (UMPC), mobile Internet device (MID), wearable device or Vehicle User Equipment (VUE), pedestrian User Equipment (PUE). The wearable device includes: bracelets, headphones, glasses, etc. It is to be noted that the specific type of the terminal 11 is not limited in the embodiment of the present disclosure. The network device 12 may be a base station or a core network. The base station may be referred to as a Node B, an evolved Node B, an access point, a Base Transceiver Station (BTS), a radio base station, a radio transceiver, a Basic Service Set (BSS), Extended Service Set (ESS), B node, evolved B node (eNB), home B node, home evolved B node, Wireless Local Area Networks (WLAN) access point, Wireless Fidelity (WiFi) node, Transmitting Receiving Point (TRP) or some other suitable term in the field, as long as the same technical effect is achieved, the base station is not limited to specific technical term. It is to be noted that in the embodiment of the present disclosure, the base station in the NR system is only taken as an example, but the specific type of the base station is not limited.

In order to enable those skilled in the art to better understand the embodiments of the present disclosure, the following description is provided first.

Physical channel: corresponds to a set of a series of Resource Elements (REs) that need to carry information from higher layers, called a physical channel; such as Physical Downlink Control Channel (PDCCH) which carries downlink control information (DCI) and Physical Downlink Share Channel (PDSCH) which carries data.

Physical signal: corresponding to a series of REs used by a physical layer, but these REs do not transmit any information from higher layers, such as reference signal and synchronization signal.

### First: Physical signal

When divided by function,
NR downlink physical signals include channel state information reference signal (CSI-RS), dedicated demodulation reference signals (DM-RS), time-frequency tracking reference signal (TRS), phase noise tracking reference signal (PT-RS), radio resource management (RRM) measurement reference signal, radio link monitoring (RLM) measurement reference signal, etc.

NR uplink physical signals include sounding reference signal (SRS), dedicated demodulation reference signals (DM-RS), phase noise tracking reference signal (PT-RS), etc. The design of uplink DM-RS and PT-RS is basically the same as that of downlink.

The reference signals of 5G NR are briefly introduced hereinafter.

### Channel state information reference signal (CSI-RS)

The number of antenna ports of CSI-RS can reach up to 32, including 1, 2, 4, 8, 12, 16, 24 and 32. It supports CSI measurement of large-scale antenna technology. The time-frequency resource location of CSI-RS is flexibly configured by high-level signaling, including occupied orthogonal frequency division multiplex (OFDM) symbols and physical resource blocks (PRB). CSI-RS can be transmitted on any OFDM symbol within a slot, and can be transmitted on any consecutive PRB within the bandwidth part (BWP) (the minimum bandwidth is 24 PRBs). For a given number of antenna ports, the pattern of CSI-RS in a PRB no longer has a fixed form, but is flexibly configured by the base station according to available time-frequency resources.

CSI-RS can be further divided into beam management CSI-RS and CSI acquisition CSI-RS.

Beam management CSI-RS is used for beam measurement and reporting in the beam management process. UE receives CSI-RS transmitted by beamforming, measures its quality (received signal power), and selects the best transmitting and receiving beams. Therefore, the beam management CSI-RS only needs to measure Reference Signal Receiving Power (PSRP).

CSI acquisition CSI-RS: its transmission is divided into two situations. One is wide beamforming transmission, in which each antenna port of CSI-RS is wide beamforming transmission, covering an angular range of an entire cell. In order to obtain complete CSI, this transmission mode requires a larger number of ports (maximum 32 ports). Another is narrow beamforming transmission, in which CSI-RS undergoes beamforming to obtain shaping gain and increase coverage distance. At this point, each antenna port transmits narrow beams, so the angular range of spatial coverage is smaller. In order to cover all UEs in a cell, multiple beamforming CSI-RSs often need to be configured and transmitted, but each beamforming CSI-RS can contain a smaller number of antenna ports.

### 2. Time-frequency tracking reference signal (TRS)

In the LTE system, CRS is sent in every sub-frame, and the UE can achieve high-precision time-frequency synchronization by measuring CRS. Continuous and periodic transmission of reference signals will cause forward compatibility issues and unnecessary power waste. Therefore, NR introduces TRS that can be configured and triggered as needed to achieve precise time-frequency synchronization. Since the structure and configuration mode of CSI-RS are flexible enough, NR uses a specially configured CSI-RS as TRS. Specifically, NR uses a CSI-RS Resource Set containing N (2 or 4) periodic CSI-RS resources to implement the function of TRS, where each CSI-RS resource is a port and occupies one OFDM symbol alone. The UE regards the antenna ports of different CSI-RS resources in the set as the same antenna port. The precise time-frequency synchronization requires UE to continuously track and measure, thus TRS is mainly transmitted periodically, and aperiodic TRS is used in some special scenarios.

### 3. Demodulation reference signal (DM-RS)

The function of DM-RS is to use DM-RS to perform channel estimation on uplink and downlink traffic channels and control channels to achieve coherent demodulation. DM-RS and data use the same precoding process, thus the channel estimated by a receiving end from DM-RS is directly used for data demodulation without additional indication of precoding-related information. In order to reduce demodulation and decoding delays, NR data channel (PDSCH/PUSCH) adopts the design of placing DM-RS in the front. In each scheduling time unit, the location of DM-RS is as close to the starting point of scheduling as possible. After the UE receives PDCCH and its scheduled PDSCH, the UE needs to complete demodulation and decoding within a certain period of time in order to feed back hybrid automatic repeat request acknowledgment (HARQ-ACK) information on Physical Uplink Control Channel (PUCCH) resource allocated by the base station.

In order to support medium and high mobility rates, NR can configure additional DM-RS for the UE on the basis of placing DM-RS in the front. Pattern of each set of additional DM-RS is a repetition of the preceding DM-RS. Therefore, consistent with the preceding DM-RS, each set of additional DM-RS can occupy up to two consecutive symbols. Depending on different mobility rates, the base station can configure 1 to 3 sets of additional DM-RS symbols for the UE.

### 4. Phase noise tracking reference signal (PT-RS)

Phase noise (PN) is mainly introduced by the local oscillation circuit. The phase noise will destroy orthogonality between subcarriers in the OFDM system and introduce inter-subcarrier interference. At the same point, phase noise introduces the same Common Phase Error (CPE) on all subcarriers, causing modulation constellation points on all subcarriers to rotate at a fixed angle. The phase noise has a significant impact on system performance in the high frequency band, but the subcarrier spacing used by NR in the high frequency band is larger, and the inter-subcarrier interference caused by the phase noise has little impact on the demodulation performance. Therefore, PT-RS designed in NR is mainly used to implement estimation and compensation for CPE.

The PT-RS is transmitted within the time-frequency resource range occupied by the service channel and is used in conjunction with DM-RS. The PT-RS is mapped on OFDM symbols without DM-RS, and the phase change on each OFDM symbol is estimated for phase compensation. Since the CPE is the same across the entire frequency band, ideally, CPE estimation and compensation can be achieved by using one subcarrier to transmit PT-RS. However, due to the influence of interference and noise, CPE estimation by using only one subcarrier may have a large estimation error. Therefore, more subcarriers are needed to transmit PT-RS to improve the accuracy of CPE estimation. In NR, a uniform density of occupying one subcarrier in several PRBs is used to transmit PT-RS. Frequency domain density is roughly inversely proportional to scheduling bandwidth. The larger the scheduling bandwidth, the lower the density. In the time domain, PT-RS can occupy 1 OFDM symbol for transmission in every 1/2/4 OFDM symbols. The time domain density of PT-RS is related to the MCS level used by the service channel. The higher the MCS level, the greater the time domain density. This is because the demodulation performance of high-level modulation and coding scheme (MCS) is more sensitive to phase noise and requires relatively more accurate phase noise estimation and compensation.

### 5. Sounding Reference Signal (SRS)

The main functions of SRS are to uplink channel status information acquisition, downlink channel status information acquisition and beam management. The SRS for obtaining uplink channel status information can be further divided into two types according to the corresponding transmission scheme (codebook and non-codebook). Therefore, NR supports 4 types of SRS with different functions. SRS with different functions are managed and configured in the form of SRS resource set. The base station can configure multiple SRS resource sets for the UE, and function of each resource set is configured through high-layer signaling.

The usages of NR SRS have been expanded compared to LTE. Meanwhile, due to the increase in the number of users and service volume, the NR system has a greater demand for SRS resources. Therefore, NR allows the last 6 symbols of each uplink slot to be used for SRS transmission. Each SRS resource can occupy 1, 2 or 4 consecutive OFDM symbols in a slot. The purpose of allowing SRS to be transmitted on multiple OFDM symbols is to extend uplink coverage. The same SRS resource can be repeatedly transmitted on the same sub-band on multiple OFDM symbols, or can be transmitted by frequency hopping between different sub-bands.

One SRS resource can include 1, 2 or 4 antenna ports, which are configured by the base station according to the UE's capabilities. Multiple antenna ports are multiplexed in a code division multiplexing (CDM) or frequency division multiplexing (FDM) plus CDM manner. SRS transmission in the frequency domain adopts a comb structure, and the spacing between subcarriers occupied by SRS can be configured as 2 or 4.

The UE can transmit SRS in a beamforming or non-beamforming mode. For non-codebook transmission, the UE measures the downlink channel, uses channel reciprocity to obtain uplink beamforming weight, and transmits the corresponding beam-formed SRS. For beam management, SRS is sent by using the UE's candidate transmit beams, respectively, and the base station performs measurement and selects the appropriate UE transmit beam. For the codebook transmission scheme, whether the SRS is beam-formed depends on configuration of the base station and the implementation structure of the UE. If the base station configures only one SRS resource for the UE for codebook transmission and the UE usually uses a wide beam to transmit the SRS, the beamforming (precoding) of data transmission is indicated by the base station in the form of transmission PMI (TPMI). If the base station configures two SRS resources for the UE, the UE can use two different narrow beams to transmit the two SRS resources, respectively. The beamforming of the data transmission is jointly determined by SRS Resource Indicator (SRI) indicated by the base station to the UE and TPMI.

In a Time Division Duplex (TDD) system, an important function of SRS is to obtain downlink channel status information. The UE often has more receiving links than transmitting links, thus the SRS sent by the UE at one time cannot obtain complete downlink channel information. In this case, NR supports the UE's SRS antenna switching, that is, the UE uses different antennas to send SRS at different times according to predefined rules, so that the base station can obtain complete downlink channel state information.

### Second: Physical channel

Physical channel corresponds to a set of specific time/frequency resources, and is used to carry higher-layer mapped transport channels. Each transport channel is mapped to a physical channel. The Physical Downlink Control Channel (PDCCH) carries downlink control information (DCI) and is used to provide the UE with necessary information for downlink reception and uplink transmission, such as resource allocation information. Physical Uplink Control Channel (PUCCH) carries uplink control information (UCI) and is used to report UE's status to the base station, such as HARQ reception status, channel status information, etc.

Physical channels defined by NR include the following:
Physical Downlink Shared Channel (PDSCH) is mainly used for transmission of downlink unicast data, and can also be used for transmission of paging messages and system messages. PDSCH is transmitted on antenna ports 1000-1011.
Physical Broadcast Channel (PBCH) carries part of the minimum system information required for the UE to access the network. The antenna port of PBCH is 4000.
Physical Downlink Control Channel (PDCCH) is used to transmit DCI, which mainly includes scheduling information required for the UE to receive PDSCH and transmit Physical Uplink Shared Channel (PUSCH). PDCCH can also transmit Slot Format Indicator (SFI) and preemption indication (PI), etc. The antenna port of PDCCH is 2000.
Physical uplink shared channel (PUSCH) corresponds to uplink physical channel of PDSCH and is used to transmit uplink service data and can also be used to carry UCI. PUSCH is transmitted on antenna ports 1000-1003.
Physical uplink control channel (PUCCH) carries UCI, feeds back HARQ-ACK information to indicate whether downlink transport blocks are received correctly, reports channel status information, and requests uplink resources when uplink data arrives. The antenna port of PUCCH is 2000.
Physical Random Access Channel (PRACH) is used for random access process, and the antenna port is 4000.

The existing new radio (NR) system has designed physical channels and physical signals with different functions according to its own needs, which is consistent with the existing NR system architecture. But for future communication systems, such as 6G systems, not only traditional base stations, but also mobile nodes or terminal devices with communication modules may serve as network access points for end-to-end communication for users, and such network architecture is very flexible. The reference signals and physical channels in the existing NR systems cannot adapt to the future communication system architecture.

The technical solutions in the embodiments of the present disclosure will be clearly and completely described below with reference to the accompanying drawings in the embodiments of the present disclosure. Obviously, the described embodiments are only some embodiments of the present disclosure, rather than all embodiments. Based on the embodiments in the present disclosure, all other embodiments obtained by those of ordinary skill in the art without creative efforts fall within the scope of protection of the present disclosure.

As shown in FIG. 2, one embodiment of the present disclosure provides an information transmission method, including the following steps.

Step 201: transmitting, by a sending node, a target signal, where the target signal is used to indicate at least one of the following:
first identifier information of the sending node;
usage-related information of the target signal.

In the embodiment of the present disclosure, the sending node may be a terminal or a network device, such as a base station.

The first identifier information of the sending node includes at least one of location information, node type information or service type information of the sending node. The location information can be represented by country information (such as country code), region information (such as province code and/or city code) and local-level information (such as county code and/or street code, etc.) corresponding to the sending node. The above node type information includes terminal or base station, etc. The service type information includes radio and television, vehicle-to-everything (V2X) or extended reality (XR) services, etc. The usage-related information of the target signal includes usage (purpose) of the target signal, and may also include information needed to realize these usages. For example, if the usage is to indicate access node request information, then the access node request information may carry some information required for access. For another example, if the usage is to indicate radio resource reservation information, then the radio resource reservation information may include some specific radio resource locations, such as which physical resource blocks (PRBs) in which slots.

In the embodiment of the present disclosure, the sending node transmits the target signal to a receiving node. The target signal can indicate the first identifier information of the sending node. The receiving node can perform radio channel measurement based on the first identifier information of the sending node. The above target signal can also indicate usage-related information of the target signal, such as indicating access request information and indicating radio resource reservation information. That is, the target signal can realize the function of carrying certain information. That is to say, in the embodiment of the present disclosure, the above target signal can realize the function of a reference signal (that is, the function of performing radio channel measurement) or the function of a physical channel (that is, the function of carrying certain information). Content carried by the target signal can be flexibly set according to different usage requirements, so that it can be applied to flexible network architecture.

Optionally, the target signal carries first information, and the first information is used to indicate the first identifier information of the sending node.

Alternatively, the target signal carries first information and second information, the first information is used to indicate the first identifier information of the sending node, and the second information is used to indicate usage-related information of the target signal.

In the embodiment of the present disclosure, the above target signal may include two levels of sequences, where the first-level sequence is the first information, and the second-level sequence is the second information.

Optionally, the first information includes part information of the first identifier information, or the first information includes all the information of the first identifier information.

The first identifier information is used to indicate at least one of location information, node type and service type of the sending node.

The above node type includes macro/pico/femto base station, mobile base station (buses, trains, airplanes, etc.), terminals, etc. The above service type includes radio television, V2X or augmented reality XR services, etc.

For example, the first identifier information includes a country code, a provincial code, a county code, a terminal identifier, and a radio-television identifier. For another example, the first identifier information includes a provincial code, a county code, a terminal identifier and an XR service identifier. If the first information carried by the target signal sent by the sending node each time only includes part information of the first identifier information, the receiving node needs to receive multiple target signals from the sending node to obtain the complete first identifier information. The multiple target signals each carries part information of the first identifier information. The receiving node obtains the complete first identifier information of the terminal by receiving multiple target signals carrying the first information, and can uniquely determine the sending node.

In the embodiment of the present disclosure, each sending node corresponds to unique first identifier information, that is, the first identifier information has globally unique characteristics. In this way, the receiving node can accurately identify the sending node through the first identifier information.

Optionally, the first identifier information includes a plurality of second identification information, and the second identification information includes at least one of the following:
national-level identifier, such as country code;
region-level identifier, such as provincial code and/or city code;
local-level identifier, such as county code and/or street code, etc.;
node type identifier, such as terminal identifier or base station identifier;
service-level identifier, such as radio and television identifier, V2X identifier or augmented reality XR service identifier.

In the embodiment of the present disclosure, the node type identifier can also be described as an individual-level identifier. The node type can be determined through the individual-level identifier, and the service type of the sending node can be indicated through the service-level identifier.

Optionally, the target signal is used to identify the sending node and/or for radio channel measurement, that is, when the target signal carries the first information or when the target signal carries the first information and the second information, the target signal can be used to identify the sending node and/or for radio channel measurement.

In the embodiment of the present disclosure, the sending node transmits a target signal to the receiving node; and the receiving node identifies the sending node through the first information in the target signal, and then performs radio channel measurement based on this. The radio channel measurement includes long-term channel measurement and/or short-term channel state measurement. The long-term channel measurement is used for access point selection and frequency reuse; the short-term channel state measurement is used for CSI and co-channel interference estimation.

Optionally, the second information includes at least one of the following:
access request information used to request access to the receiving node;
node switching indication information used to indicate the sending node or the receiving node to switch the access node;
service type information used to indicate a service type of the sending node;
radio resource reservation information used to indicate radio resources reserved by the sending node or radio resources allocated to the receiving node.

In the embodiment of the present disclosure, when the target signal carries the first information and the second information, the target signal can also be used for access and information carrying, specifically including at least one of carrying an access request, carrying an indication of different access points, carrying an indication of different service types, or carrying radio resource reservation information.

Optionally, before transmitting, by the sending node, the target signal, the method further includes:
determining a transmission resource of the target signal according to pre-configuration information, where the pre-configuration information includes at least one of a transmission cycle and a cycle offset value;
where transmission resources corresponding to different sending nodes do not overlap.

In the embodiment of the present disclosure, the transmission resource of the target signal can be determined based on the preconfigured transmission cycle; the transmission resource of the target signal can also be determined based on the cycle offset value and a default transmission cycle; or the transmission resource of the target signal can be determined according to a sum of the transmission cycle and the cycle offset value.

Non-overlapping of transmission resources can be understood as non-overlapping of transmission resources in at least one of the time domain, frequency domain and spatial domain.

In the embodiment of the present disclosure, the target signals transmitted by different nodes are staggered in some way, including staggering in the time domain and/or frequency domain and/or spatial domain.

In the first embodiment of the present disclosure, it is assumed that a terminal transmits a target signal to an access point. The target signal is composed of a one-level sequence and carries only the first information. The terminal (this terminal is a conventional terminal and is a terminal device that does not serve as an access point) transmits the target signal to the access point (AP), and the target signal carries the first information which includes part or all of the first identifier information. The first identifier information has globally unique characteristics. The first identifier is composed of multi-levels of second identifiers. The second identifiers include a national-level identifier and/or a region-level identifier and/or a local-level identifier and/or an individual-level identifier and/or service-level identifier. The individual-level identifier indicates the node type of the node, such as a terminal; and the service-level identifier indicates the service type of the terminal, so that the first identifier indicates the node type and/or the service type.

The access point (AP) receives the target signal transmitted by the terminal and learns part or all of the first identifier information of the terminal based on the first information. If the first information carried by the target signal transmitted by the terminal each time only includes part information of the first identifier information, the access point AP needs to receive multiple target signals from the terminal to obtain the complete first identifier information. The multiple target signals carry part information of the first identifier information, respectively. The access point AP obtains the complete first identifier information of the terminal and can uniquely determine the terminal.

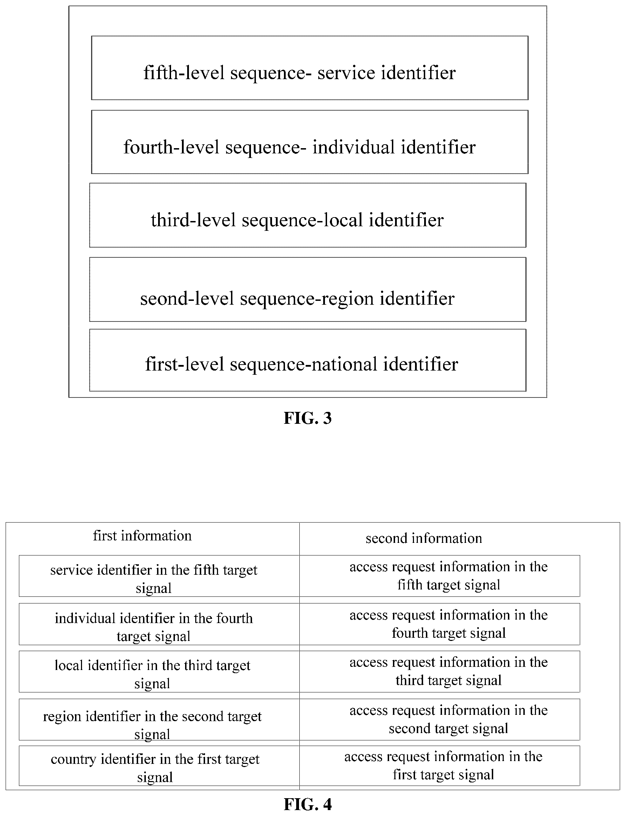

For example, as shown in FIG. 3, the terminal transmits a first target signal carrying first part information of the first identifier information, where the first part information is a national-level identifier; and transmits a second target signal carrying second part information of the first identifier information, where the second part information is a region-level identifier; and transmits a third target signal carrying third part information of the first identifier information, where the third part information is a local-level identifier; and transmits a fourth target signal carrying fourth part information of the first identifier information, where the fourth part information is a node type identifier (for example, the node type is a terminal); and transmits a fifth target signal carrying fifth part information of the first identifier information, where the fifth part information is a service-level identifier. The service-level identifier can indicate the service type of the terminal (such as radio television, V2X or augmented reality XR service). The access point receives the five target signals transmitted by the terminal, then obtains the complete first identifier information, and can uniquely determine the terminal.

The access point can perform radio channel measurement based on the reception of the above target signal (which can also be described as a reference signal (AP-RS)), thereby obtaining channel state information of a link in a direction from the terminal to the access point.

In this embodiment, the target signal may also be composed of a two-level sequence, carrying first information and second information. The terminal transmits a target signal to the access point, and the target signal is composed of a two-level sequence. The first level carries the first information (as described above), and the second level carries the second information. The second information includes access request information, and/or radio resource reservation information, and/or service type information, and/or node switching indication information. The access request information carried by the target signal indicates a request for access to the receiving node. The node switching indication information indicates dynamic switching to other access point. The service type information indicates the service type. The resource reservation information indicates time-frequency resources reserved by the sending node.

In case that the target signal is used for the access request, the second information at least includes access request information. The access point receives a target signal carrying access request information, the access point uniquely determines the terminal based on the first information carried in the target signal, and starts subsequent procedures for terminal access based on the second information carried in the target signal. The sequence structure of the target signal is shown in FIG. 4.

In case that the target signal is used for indication of different service types, the second information at least includes service type information. The access point receives the target signal carrying service type information, the access point uniquely determines the terminal based on the first information carried by the target signal, and learns the service type of the terminal based on the second information carried by the target signal.

In case that the target signal is used for radio resource reservation, the second information at least includes radio resource reservation information. The access point receives the target signal carrying radio resource reservation information, the access point uniquely determines the terminal based on the first information carried by the target signal, and learns the radio resources reserved by the terminal based on the second information carried by the target signal.

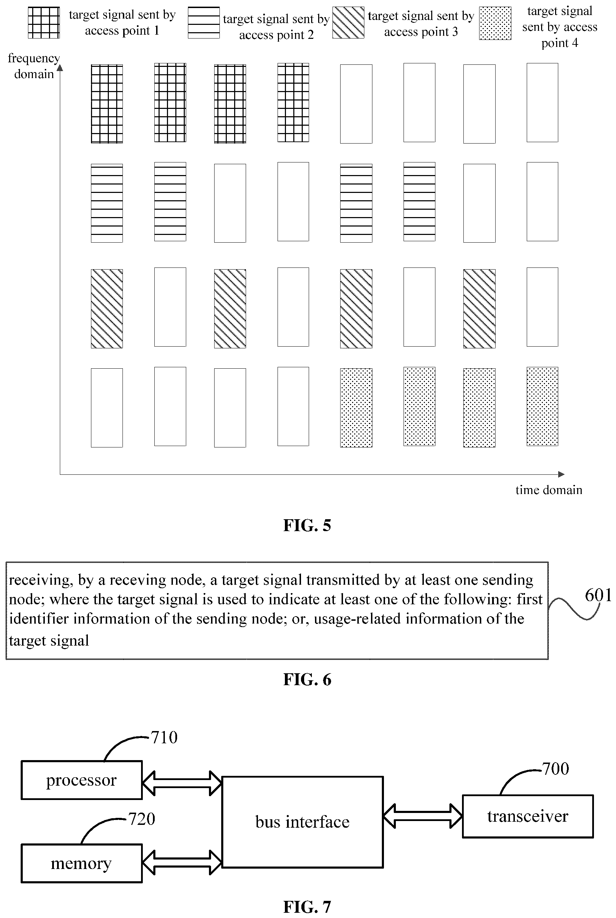

In the second embodiment of the present disclosure, the access point transmits a target signal to the terminal, and the target signals transmitted by different access points are staggered in some way, including staggering in the time domain and/or frequency domain and/or spatial domain. A possible case where target signals transmitted by different access points is shown in FIG. 5.
(1) The target signal is composed of a one-level sequence and carries the first information.

The access point transmits a target signal, where the target signal carries first information which includes part or all of the first identifier information. The first identifier information has globally unique characteristics. Relevant description of the first identifier information refers to the description of the first identifier information in the first embodiment, which will not be described again here.

In the scenario where the terminal performs cell search, the target signal is used to identify the access point.

The terminal (this terminal is a conventional terminal and is a terminal device that does not serve as an access point) receives the target signal transmitted by the access point. The terminal obtains complete first identifier information of the access point based on at least one target signal transmitted by the access point, thereby uniquely determining the access point. The specific implementation process is similar to that of the first embodiment and will not be repeated here.

The target signal is used for radio channel measurement. After receiving the target signal transmitted by the access point, the terminal can perform radio channel measurement based on the reception of the target signal, including long-term channel measurement and/or short-term channel state measurement. The long-term channel measurement is used for access point selection and frequency reuse; the short-term channel state measurement is used to obtain channel state information and co-channel interference estimation of a link in a direction from the access point to the terminal.

In this embodiment, the target signal may also be composed of a two-level sequence, carrying first information and second information. The description of the first information and the second information refers to the first embodiment.

In a third embodiment of the present disclosure, a first access point transmits a target signal to a second access point, and the target signals transmitted by different access points are staggered in some way, including staggering in the time domain and/or frequency domain and/or spatial domain. A possible case where target signals transmitted by different access points is shown in FIG. 5. The relevant description of the target signal in this embodiment is the same as the above first embodiment, and will not be described again here.

In this embodiment, the second access point receives the target signal transmitted by the first access point, and can perform radio channel measurement based on the reception of the target signal, thereby obtaining channel state information of a link in a direction from the first access point to the second access point.

When the target signal is composed of a two-level sequence and carries first information and second information, it is as follows.

In the scenario where an access point accesses to the network, the first access point (such as a terminal device serving as an access point) transmits a target signal to a second access point (such as a base station wired to the core network device). The second information carried in the target signal at least includes access request information. The access request information indicates that the first access point requests access to the network. The second access point reports the access request of the first access point to the core network. In the scenario where an access point accesses to the network, the first access point can also directly transmit the target signal to the core network device, and the second information carried by the target signal at least includes access request information, and the access request information indicates that the first access point requests access to the network.

For radio resource allocation of access points under a distributed control architecture, the target signal is used for radio resource reservation, and the second information at least includes radio resource reservation information. The radio resource reservation information indicates radio resources reserved by the first access point. The second access point receives the target signal sent by the first access point and learns which radio resources are reserved by the first access point. In distributed control architecture, this helps negotiate resource allocation between access points.

In a fourth embodiment of the present disclosure, a first terminal transmits a target signal to a second terminal. The target signals transmitted by different terminals are staggered in some way, including staggering in the time domain and/or frequency domain and/or spatial domain. A possible case where target signals transmitted by different access points is shown in FIG. 5. The relevant description of the target signal in this embodiment is the same as the above first embodiment, and will not be described again here.

In this embodiment, the second terminal receives the target signal transmitted by the first terminal, and can perform radio channel measurement based on the reception of the target signal, thereby obtaining channel state information of a link in a direction from the first terminal to the second terminal.

When the target signal is composed of a two-level sequence and carries first information and second information, it is as follows.

For a first terminal to access a second terminal, the target signal may be used for an access request, and the second information at least includes access request information. The second terminal receives the target signal carrying the access request information, uniquely determines the first terminal based on the first information carried by the target signal, and performs terminal access based on the second information carried by the target signal. The above steps can help establish connections between terminals to achieve device-to-device (D2D) communication.

For the terminal to notify the service type, the target signal can be used to indicate different service types, and the second information at least includes service type information. The second terminal receives the target signal, uniquely determines the first terminal based on the first information carried by the target signal, and learns the service type of the first terminal based on the second information carried by the target signal.

For wireless resource reservation, the target signal is used for radio resource reservation, and the second information at least includes radio resource reservation information. The second terminal receives the target signal, uniquely determines the first terminal according to the first information carried by the target signal, and learns the radio resources reserved by the first terminal according to the second information carried by the target signal. By using target signals to reserve radio resources, it allows devices participating in D2D communication to master the radio resources used by other devices to achieve distributed resource allocation.

For access point switching indication, the target signal is used for access point switching indication, and the second information at least includes node switching indication information. The second terminal receives the target signal, uniquely determines the first terminal based on the first information carried by the target signal, and performs access point switching based on the second information carried by the target signal. With this embodiment, in a scenario where cell coverage is limited, the access point can first send the access point switching instruction of the second terminal to the first terminal, and then the first terminal sends a target signal to the second terminal to instruct the second terminal to switch, thereby ensuring the reliability of the access point switching instruction.

In the embodiment of the present disclosure, the sending node transmits a target signal to the receiving node. The target signal can indicate the first identifier information of the sending node. The receiving node can perform radio channel measurement based on the first identifier information of the sending node; the above target signal can also indicate usage-related information of the target signal, such as indicating access request information and indicating radio resource reservation information. That is, the target signal can realize the function of carrying certain information. That is to say, in the embodiment of the present disclosure, the above target signal can realize the function of a reference signal (that is, the function of performing radio channel measurement) or the function of a physical channel (that is, the function of carrying certain information). Content carried by the target signal can be flexibly set according to different usage requirements, so that it can be applied to flexible network architecture.

As shown in FIG. 6, one embodiment of the present disclosure further provides an information transmission method, including:

Step 601: receiving, by a receiving node, a target signal transmitted by at least one sending node; where the target signal is used to indicate at least one of the following:
first identifier information of the sending node;
usage-related information of the target signal.

The receiving node can be a terminal or a network side device, such as a base station.

The usage-related information of the target signal includes usage (purpose) of the target signal, and may also include information needed to realize these usages. For example, if the usage is to indicate access node request information, then some information required for access may be carried. For another example, if the usage is to indicate radio resource reservation information, then the radio resource reservation information may include some specific radio resource locations, such as which physical resource blocks (PRBs) in which slots.

In the embodiment of the present disclosure, the sending node transmits a target signal to the receiving node. The target signal can indicate the first identifier information of the sending node, and the receiving node can perform radio channel measurement based on the first identifier information of the sending node. The above target signal can also indicate usage-related information of the target signal, such as indicating access request information and indicating radio resource reservation information. That is, the target signal can realize the function of carrying certain information. That is to say, in the embodiment of the present disclosure, the above target signal can realize the function of a reference signal (that is, the function of performing radio channel measurement) or the function of a physical channel (that is, the function of carrying certain information). Content carried by the target signal can be flexibly set according to different usage requirements, so that it can be applied to flexible network architecture.

Optionally, the target signal carries first information, and the first information is used to indicate the first identifier information of the sending node.

Alternatively, the target signal carries first information and second information, the first information is used to indicate the first identifier information of the sending node, and the second information is used to indicate usage-related information of the target signal.

In the embodiment of the present disclosure, the above target signal may include two levels of sequences, where the first-level sequence is the first information, and the second-level sequence is the second information.

Optionally, the first information includes part information of the first identifier information, or the first information includes all the information of the first identifier information.

The first identifier information is used to indicate at least one of location information, node type and service type of the sending node.

Optionally, each sending node corresponds to unique first identifier information.

The above node type includes macro/pico/femto base station, mobile base station (buses, trains, airplanes, etc.), terminals, etc. The above service type includes radio television, V2X or augmented reality XR services, etc.

If the first information carried by the target signal sent by the sending node each time only includes part information of the first identifier information, the receiving node needs to receive multiple target signals from the sending node to obtain the complete first identifier information. The multiple target signals each carries part information of the first identifier information. The receiving node obtains the complete first identifier information of the terminal by receiving multiple target signals carrying the first information, and can uniquely determine the sending node.

In the embodiment of the present disclosure, each sending node corresponds to unique first identifier information, that is, the first identifier information has globally unique characteristics. In this way, the receiving node can accurately identify the sending node through the first identifier information.

Optionally, the first identifier information includes a plurality of second identification information, and the second identification information includes at least one of the following:
national-level identifier;
region-level identifier;
local-level identifier;
node type identifier;
service-level identifier.

Optionally, after receiving, by the receiving node, the target signal, the method further includes:
identifying, by the receiving node, the sending node and/or performing radio channel measurement, according to the target signal.

In the embodiment of the present disclosure, the sending node transmits a target signal to the receiving node; and the receiving node identifies the sending node through the first information in the target signal, and then performs radio channel measurement based on this. The radio channel measurement includes long-term channel measurement and/or short-term channel state measurement. The long-term channel measurement is used for access point selection and frequency reuse; the short-term channel state measurement is used for CSI and co-channel interference estimation.

Optionally, the second information includes at least one of the following:
access request information used to request access to the receiving node;
node switching indication information used to indicate the sending node or the receiving node to switch the access node;
service type information used to indicate a service type of the sending node;
radio resource reservation information used to indicate radio resources reserved by the sending node or radio resources allocated to the receiving node.

Optionally, after the receiving node receives the target signal transmitted by the sending node, the method further includes:
according to the second information, performing at least one of the following:
performing access processing on the sending node;
determining that the sending node switches an access node;
determining the service type of the sending node;
determining the radio resources reserved by the sending node or radio resources allocated to the receiving node.

It is to be noted that the information transmission method on the receiving node side is a method corresponding to the above information transmission method on the sending node side. The interaction process between the receiving node and the sending node has been detailed in the embodiment of the information transmission method on the sending node side, which will not be repeated here.

As shown in FIG. 7, one embodiment of the present disclosure provides an information transmission device, including a memory 720, a transceiver 700, and a processor 710.

The memory 720 is used to store a computer program. The transceiver 700 is used to send and receive data under control of the processor.

In one embodiment of the present disclosure, the processor 710 is used to read the computer program in the memory and perform the following operations:
transmitting a target signal at a sending node through the transceiver 700, where the target signal is used to indicate at least one of the following:
first identifier information of the sending node;
usage-related information of the target signal.

Optionally, the target signal carries first information, and the first information is used to indicate the first identifier information of the sending node.

Alternatively, the target signal carries first information and second information, the first information is used to indicate the first identifier information of the sending node, and the second information is used to indicate usage-related information of the target signal.

Optionally, the first information includes part information of the first identifier information, or the first information includes all the information of the first identifier information.

The first identifier information is used to indicate at least one of location information, node type and service type of the sending node.

Optionally, each sending node corresponds to unique first identifier information.

Optionally, the first identifier information includes a plurality of second identification information, and the second identification information includes at least one of the following:
national-level identifier;
region-level identifier;
local-level identifier;
individual-level identifier;
service-level identifier.

Optionally, the target signal is used to identify the sending node and/or for radio channel measurement.

Optionally, the second information includes at least one of the following:
access request information used to request access to the receiving node;
node switching indication information used to indicate the sending node or the receiving node to switch the access node;
service type information used to indicate a service type of the sending node;
radio resource reservation information used to indicate radio resources reserved by the sending node or radio resources allocated to the receiving node.

Optionally, the processor 710 executes the program to perform the following steps:
determining a transmission resource of the target signal according to pre-configuration information, where the pre-configuration information includes at least one of a transmission cycle and a cycle offset value.

Optionally, transmission resources corresponding to different sending nodes do not overlap.

In another embodiment of the present disclosure, the processor 710 is used to receive a target signal sent by at least one sending node through the transceiver 700, where the target signal is used to indicate at least one of the following:
first identifier information of the sending node;
usage-related information of the target signal.

Optionally, the target signal carries first information.

Alternatively, the target signal carries first information and second information, the first information is used to indicate the first identifier information of the sending node, and the second information is used to indicate usage-related information of the target signal.

Optionally, the first information includes part information of the first identifier information, or the first information includes all the information of the first identifier information.

The first identifier information is used to indicate at least one of location information, node type and service type of the sending node.

Optionally, each sending node corresponds to unique first identifier information.

Optionally, the processor 710 executes the program to perform the following steps:
identifying the sending node and/or performing radio channel measurement, based on the target signal.

Optionally, the second information includes at least one of the following:
Optionally, the second information includes at least one of the following:
access request information used to request access to the receiving node;
node switching indication information used to indicate the sending node or the receiving node to switch the access node;
service type information used to indicate a service type of the sending node;
radio resource reservation information used to indicate radio resources reserved by the sending node or radio resources allocated to the receiving node.

Optionally, the processor 710 executes the program to perform the following steps:
according to the second information, performing at least one of the following:
performing access processing on the sending node;
determining that the sending node switches an access node;
determining the service type of the sending node;
determining the radio resources reserved by the sending node or radio resources allocated to the receiving node.

In FIG. 7, a bus architecture may include any number of interconnected bus and bridge. Specifically, various circuits of one or more processors, which are represented by the processor 710, and one or more memories, which are represented by the memory 720, are linked together. The bus architecture may link various other circuits, such as a peripheral device, voltage regulator and a power management circuit together. These features are well known in this field; therefore, this disclosure does not make further description on these features. The bus interface provides an interface. The transceiver 700 may be multiple elements, including a transmitter and a receiver and provide units, which communicate with other devices on the transmission medium. The transmission medium includes radio channels, wired channels, optical cables, etc. The processor 710 is responsible for managing the bus architecture and the normal processing. The memory 720 may be used to store data used by the processor 710 for performing operations.

The processor 710 may be a central processing unit (CPU), an application specific integrated circuit (ASIC), a field-programmable gate array (FPGA) or a complex programmable logic device (CPLD). The processor may also adopt multi-core architecture.

It is to be noted here that the above device provided in the embodiment of the present disclosure can implement all the method steps of the above information transmission method embodiment, and can achieve the same technical effect. The parts and beneficial effects of this embodiment that are the same as those in the method embodiment will not be described in detail here.

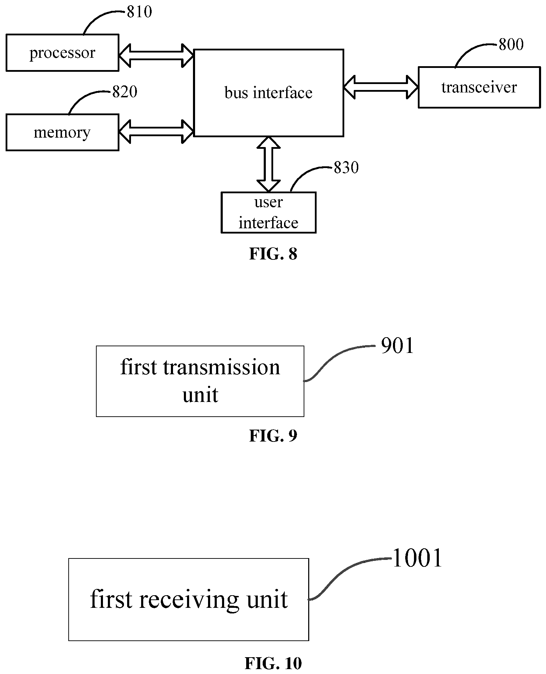

As shown in FIG. 8, one embodiment of the present disclosure further provides an information transmission device, including a memory 820, a transceiver 800, and a processor 810.

The memory 820 is used to store a computer program. The transceiver 800 is used to send and receive data under control of the processor.

In one embodiment of the present disclosure, the processor 810 is used to read the computer program in the memory and perform the following operations:
transmitting a target signal at a sending node through the transceiver 800, where the target signal is used to indicate at least one of the following:
first identifier information of the sending node;
usage-related information of the target signal.

Optionally, the target signal carries first information, and the first information is used to indicate the first identifier information of the sending node.

Alternatively, the target signal carries first information and second information, the first information is used to indicate the first identifier information of the sending node, and the second information is used to indicate usage-related information of the target signal.

Optionally, the first information includes part information of the first identifier information, or the first information includes all the information of the first identifier information.

The first identifier information is used to indicate at least one of location information, node type and service type of the sending node.

Optionally, each sending node corresponds to unique first identifier information.

Optionally, the target signal is used to identify the sending node and/or for radio channel measurement.

Optionally, the second information includes at least one of the following:
access request information used to request access to the receiving node;
node switching indication information used to indicate the sending node or the receiving node to switch the access node;
service type information used to indicate a service type of the sending node;
radio resource reservation information used to indicate radio resources reserved by the sending node or radio resources allocated to the receiving node.

Optionally, the processor 810 executes the program to perform the following steps:
determining a transmission resource of the target signal according to pre-configuration information, where the pre-configuration information includes at least one of a transmission cycle and a cycle offset value;
Optionally, transmission resources corresponding to different sending nodes do not overlap.

In another embodiment of the present disclosure, the processor 810 is used to receive a target signal transmitted by at least one sending node through the transceiver 800, where the target signal is used to indicate at least one of the following:
first identifier information of the sending node;
usage-related information of the target signal.

Optionally, the target signal carries first information, and the first information is used to indicate the first identifier information of the sending node.

Alternatively, the target signal carries first information and second information, the first information is used to indicate the first identifier information of the sending node, and the second information is used to indicate usage-related information of the target signal.

Optionally, the first information includes part information of the first identifier information, or the first information includes all the information of the first identifier information.

The first identifier information is used to indicate at least one of location information, node type and service type of the sending node.

Optionally, each sending node corresponds to unique first identifier information.

Optionally, the processor 810 executes the program to perform the following steps:
identifying the sending node and/or performing radio channel measurement, according to the target signal.

Optionally, the second information includes at least one of the following:
access request information used to request access to the receiving node;
node switching indication information used to indicate the sending node or the receiving node to switch the access node;
service type information used to indicate a service type of the sending node;
radio resource reservation information used to indicate radio resources reserved by the sending node or radio resources allocated to the receiving node.

Optionally, the processor 810 executes the program to perform the following steps:
according to the second information, performing at least one of the following:
performing access processing on the sending node;
determining that the sending node switches an access node;
determining the service type of the sending node;
determining the radio resources reserved by the sending node or radio resources allocated to the receiving node.

In FIG. 8, a bus architecture may include any number of interconnected bus and bridge. Specifically, various circuits of one or more processors, which are represented by the processor 810, and one or more memories, which are represented by the memory 820, are linked together. The bus architecture may link various other circuits, such as a peripheral device, voltage regulator and a power management circuit together. These features are well known in this field; therefore, this disclosure does not make further description on these features. The bus interface provides an interface. The transceiver 800 may be multiple elements, including a transmitter and a receiver and provide units, which communicate with other devices on the transmission medium. The transmission medium includes radio channels, wired channels, optical cables, etc. For different UEs, a user interface 830 may be an interface that can be connected to external or internal devices. The connected devices include but are not limited to a small keyboard, a display, a speaker, a microphone, a joystick, etc.

The processor 810 is responsible for managing the bus architecture and the normal processing. The memory 820 may be used to store data used by the processor 820 for performing operations.

Optionally, the processor 810 may be a central processing unit (CPU), an application specific integrated circuit (ASIC), a field-programmable gate array (FPGA) or a complex programmable logic device (CPLD). The processor may also adopt multi-core architecture.

The processor calls the computer program stored in the memory to execute any method provided in the embodiment of the present disclosure according to obtained executable instructions. The processor and the memory may also be arranged physically separately.

It is to be noted here that the above device provided in the embodiment of the present disclosure can implement all the method steps implemented in the above information transmission method embodiment, and can achieve the same technical effect. The parts and beneficial effects of this embodiment that are the same as those in the method embodiment will not be described in detail here.

As shown in FIG. 9, one embodiment of the present disclosure further provides an information transmission device, applied to a sending node and including:
a first transmission unit 901 used to transmit a target signal, where the target signal is used to indicate at least one of the following:
first identifier information of the sending node;
usage-related information of the target signal.

Optionally, the target signal carries first information, and the first information is used to indicate the first identifier information of the sending node.

Alternatively, the target signal carries first information and second information, the first information is used to indicate the first identifier information of the sending node, and the second information is used to indicate usage-related information of the target signal.

Optionally, the first information includes part information of the first identifier information, or the first information includes all the information of the first identifier information.

The first identifier information is used to indicate at least one of location information, node type and service type of the sending node.

Optionally, each sending node corresponds to unique first identifier information.

Optionally, the target signal is used to identify the sending node and/or for radio channel measurement.

Optionally, the second information includes at least one of the following:
access request information used to request access to the receiving node;
node switching indication information used to indicate the sending node or the receiving node to switch the access node;
service type information used to indicate a service type of the sending node;
radio resource reservation information used to indicate radio resources reserved by the sending node or radio resources allocated to the receiving node.

Optionally, the device of this embodiment of the present disclosure further includes:
a first determination unit used to, before the first transmission unit transmits the target signal, determine a transmission resource of the target signal according to pre-configuration information, where the pre-configuration information includes at least one of a transmission cycle and a cycle offset value.

Optionally, transmission resources corresponding to different sending nodes do not overlap.

It is to be noted here that the above device provided in the embodiment of the present disclosure can implement all the method steps of the above information transmission method embodiment, and can achieve the same technical effect. The parts and beneficial effects of this embodiment that are the same as those in the method embodiment will not be described in detail here.

As shown in FIG. 10, one embodiment of the present disclosure further provides an information transmission device, including:
a first receiving unit 1001 used to receive a target signal transmitted by at least one sending node, where the target signal is used to indicate at least one of the following:
first identifier information of the sending node;
usage-related information of the target signal.

Optionally, the target signal carries first information, and the first information is used to indicate the first identifier information of the sending node.

Alternatively, the target signal carries first information and second information, the first information is used to indicate the first identifier information of the sending node, and the second information is used to indicate usage-related information of the target signal.

Optionally, the first information includes part information of the first identifier information, or the first information includes all the information of the first identifier information.

The first identifier information is used to indicate at least one of location information, node type and service type of the sending node.

Optionally, each sending node corresponds to unique first identifier information.

Optionally, the device of this embodiment of the present disclosure further includes:
a first processing unit used to, after the first receiving unit receives the target signal, identify the sending node and/or perform radio channel measurement, according to the target signal.

Optionally, the second information includes at least one of the following:
access request information used to request access to the receiving node;
node switching indication information used to indicate the sending node or the receiving node to switch the access node;
service type information used to indicate a service type of the sending node;
radio resource reservation information used to indicate radio resources reserved by the sending node or radio resources allocated to the receiving node.

Optionally, the device of this embodiment of the present disclosure further includes:
a second processing unit used to, after the first receiving unit receives the target signal transmitted by the sending node, according to the second information, perform at least one of the following:
performing access processing on the sending node;
determining that the sending node switches an access node;
determining the service type of the sending node;
determining the radio resources reserved by the sending node or radio resources allocated to the receiving node.

It is to be noted here that the above device provided in the embodiment of the present disclosure can implement all the method steps implemented in the above information transmission method embodiment, and can achieve the same technical effect. The parts and beneficial effects of this embodiment that are the same as those in the method embodiment will not be described in detail here.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

In some embodiments of the present disclosure, a processor-readable storage medium is provided and includes a computer program stored thereon; where the computer program is used to cause a processor to perform the following steps:

transmitting a target signal, or receiving a target signal transmitted by at least one sending node;
where the target signal is used to indicate at least one of the following:
first identifier information of the sending node;
usage-related information of the target signal.

The terminal involved in the embodiments of the present disclosure is a device for providing voice data and/or any other service data to a user, e.g., a handheld device having a wireless connection function, or any other processing device capable of being connected to a wireless modem. In different systems, the terminal device may have different names. For example, in a 5G system, the terminal device is called as User Equipment (UE). A wireless terminal device communicates with one or more Core Networks (CNs) via a Radio Access Network (RAN). The wireless terminal device may be a mobile terminal, e.g., a mobile phone (or cellular phone), or a computer having the mobile terminal device, e.g., a portable, pocket-sized, handheld, built-in or vehicle-mounted mobile device, which are capable of exchanging voice and/or data with the RAN. For example, the wireless terminal device may be a Personal Communication Service (PCS) telephone, a cordless telephone, a Session Initiation Protocol (SIP) phone, a Wireless Local Loop (WLL) station, or a Personal Digital Assistant (PDA). In addition, the wireless terminal device may also be called as system, subscriber unit, subscriber station, mobile station, mobile, remote station, access point, remote terminal, access terminal, user terminal, user agent or user device, which will not be particularly defined herein.

The network device involved in the embodiment of the present disclosure may be a base station which includes a plurality of cells providing services for the UE. Depending on different application scenarios, the base station is called as an access point, a device in an access network in communication with the wireless terminal device through one or more sectors on an air interface, or any other name. The network device is used to exchange a received air frame with an Internet Protocol (IP) packet, and it serves as a router between the wireless terminal device and the other part of the access network. The other part of the access network includes an IP communication network. The network device may further coordinate attribute management on the air interface. For example, the network device involved in the embodiments of the present disclosure is a Base Transceiver Station (BTS) in the Global System for Mobile communications (GSM) or Code Division Multiple Access (CDMA) system, a NodeB in the Wide-band Code Division Multiple Access (WCDMA) system, an evolutional Node B (eNB, or e-NodeB) in the LTE system, a 5G base station (gNB) in 5G network architecture (next generation system), a Home evolved Node B (HeNB), a relay node, a femto, or a pico, which will not be particularly defined herein. In some network structures, the network device includes a Centralized Unit (CU) and a Distributed Unit (DU), which may be geographically separated from each other.

Multi Input Multi Output (MIMO) transmission is performed between the network device and the terminal device each with one or more antennae, and the MIMO transmission is Single User MIMO (SU-MIMO) or Multiple User MIMO (MU-MIMO). Depending on the form of an antenna combination and the quantity of antennae, the MIMO transmission may be 2D-MIMO, 3D-MIMO, FD-MIMO or massive-MIMO, and it may also be diversity transmission, precoding transmission or beam-forming transmission.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicate computer, an embedded processor or any other programmable data processing devices to create a machine, so that instructions executable by the processor of the computer or the other programmable data processing devices may create a device to achieve the functions assigned in one or more work flows in the flow chart and/or one or more blocks in the block diagram.

These processor-executable instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These processor-executable instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

It is to be noted that division of units in the embodiment of the present disclosure is only a logical function division; in actual implementation, all or part of the units may be integrated into one physical entity, or may also be physically separated. All of these units may be implemented in the form of using processing components to call software, or may be implemented by hardware, or some units are implemented in the form of using processing components to call software and some units are implemented by hardware. For example, the determination unit may be a separate processing element, or may be integrated into a chip of the above device; in addition, the determination unit may also be stored in the form of program codes in the memory of the above device, and is called by a certain processing element of the above device to execute the function of the above determination unit. The implementation of other units is similar. In addition, all or part of these units may be integrated together or implemented independently. The processing element described here may be an integrated circuit with signal processing capabilities. In the implementation process, each step of the above method or each of the above units may be completed by instructions of hardware integrated logic circuits or software in the processor element.

For example, each module, unit, sub-unit or sub-module may be one or more integrated circuits configured to implement the above method, such as one or more application specific integrated circuits (ASICs), or one or multiple digital signal processors (DSP), or one or more field programmable gate arrays (FPGA). For another example, when one of the above units is implemented in the form of using a processing element to call program codes, the processing element may be a general-purpose processor, such as a central processing unit (CPU) or other processors that can call the program codes. For another example, these units may be integrated together and implemented in the form of a system-on-a-chip (SOC).

The terms "first", "second" and the like in the description and claims of the present disclosure are used to distinguish similar objects and are not necessarily used to describe a specific order or sequence. It is to be understood that data so used are interchangeable under appropriate circumstances so that the embodiments of the disclosure described herein may be implemented, for example, in sequences other than those illustrated or described herein. In addition, the terms "including" and "having" and any variations thereof are intended to cover non-exclusive inclusions, for example, a process, method, system, product or device that includes a sequence of steps or units needs not be limited to those steps or units that are expressly listed, but may include steps or units that are not expressly listed or that are inherent to the process, method, product or device. In addition, "and/or" in the description and claims is used to indicate at least one of connected objects, for example, A and/or B and/or C, means that there are seven situations: there is A alone, there is B alone, there is C alone, there are both A and B, there are both B and C, there are both A and C, and there are A, B and C. Similarly, "at least one of A and B" in the specification and claims means that there is A alone, there is B alone, or there are both A and B.

Obviously, those skilled in the art can make various changes and modifications to the present disclosure without departing from the spirit and scope of the present disclosure. Thus, if these modifications and variations of the present disclosure fall within the scope of the claims of the present disclosure and equivalent technologies thereof, the present disclosure also intends to include these modifications and variations.

## Claims

1. An information transmission method, comprising:
transmitting, by a sending node, a target signal, wherein the target signal is used to indicate at least one of the following:
first identifier information of the sending node; or,
usage-related information of the target signal.

2. The method according to claim 1, wherein the target signal carries first information, or the target signal carries the first information and second information; wherein the first information is used to indicate the first identifier information of the sending node, and the second information is used to indicate the usage-related information of the target signal.

3. The method according to claim 2, wherein the first information includes part information of the first identifier information, or the first information includes all information of the first identifier information;
the first identifier information is used to indicate at least one of location information, node type or service type of the sending node.

4. The method according to claim 3, wherein each sending node corresponds to unique first identifier information.

5. The method according to claim 2, wherein the target signal is used to identify the sending node and/or used for radio channel measurement.

6. The method according to claim 2, wherein the second information includes at least one of the following:
access request information used to request access to a receiving node;
node switching indication information used to indicate the sending node or the receiving node to switch an access node;
service type information used to indicate a service type of the sending node; or,
radio resource reservation information used to indicate radio resources reserved by the sending node or radio resources allocated to the receiving node.

7. The method according to claim 1, wherein before the transmitting, by a sending node, a target signal, the method further includes:
determining a transmission resource of the target signal according to pre-configuration information, wherein the pre-configuration information includes at least one of a transmission cycle or a cycle offset value;
wherein transmission resources corresponding to different sending nodes do not overlap.

8. An information transmission method, comprising:
receiving, by a receiving node, a target signal transmitted by at least one sending node, wherein the target signal is used to indicate at least one of the following:
first identifier information of the sending node; or,
usage-related information of the target signal.

9. The method according to claim 8, wherein the target signal carries first information, or the target signal carries the first information and second information; wherein the first information is used to indicate the first identifier information of the sending node, and the second information is used to indicate the usage-related information of the target signal.

10. The method according to claim 9, wherein the first information includes part information of the first identifier information, or the first information includes all information of the first identifier information;
the first identifier information is used to indicate at least one of location information, node type or service type of the sending node.

11. The method according to claim 10, wherein each sending node corresponds to unique first identifier information.

12. The method according to claim 9, wherein after the receiving, by a receiving node, a target signal transmitted by at least one sending node, the method further includes:
identifying, by the receiving node, the sending node and/or performing, by the receiving node, radio channel measurement, according to the target signal.

13. The method according to claim 9, wherein the second information includes at least one of the following:
access request information used to request access to the receiving node;
node switching indication information used to indicate the sending node or the receiving node to switch an access node;
service type information used to indicate a service type of the sending node; or,
radio resource reservation information used to indicate radio resources reserved by the sending node or radio resources allocated to the receiving node.

14. The method according to claim 9 or 13, wherein after the receiving, by a receiving node, a target signal transmitted by at least one sending node, the method further includes:
according to the second information, perform at least one of the following:
performing access processing on the sending node;
determining that the sending node switches an access node;
determining a service type of the sending node; or,
determining radio resources reserved by the sending node or radio resources allocated to the receiving node.

15. An information transmission device, applied to a sending node, comprising:
a memory, a transceiver, and a processor;
wherein the memory is used to store a computer program; the transceiver is used to send and receive data under control of the processor; the processor is used to read the computer program in the memory and perform the following operations:
transmitting a target signal through the transceiver, wherein the target signal is used to indicate at least one of the following:
first identifier information of the sending node; or,
usage-related information of the target signal.

16. The device according to claim 15, wherein the target signal carries first information, or the target signal carries the first information and second information; wherein the first information is used to indicate the first identifier information of the sending node, and the second information is used to indicate the usage-related information of the target signal.

17. The device according to claim 16, wherein the target signal is used to identify the sending node and/or used for radio channel measurement.

18. The device according to claim 16, wherein the second information includes at least one of the following:
access request information used to request access to a receiving node;
node switching indication information used to indicate the sending node or the receiving node to switch an access node;
service type information used to indicate a service type of the sending node; or,
radio resource reservation information used to indicate radio resources reserved by the sending node or radio resources allocated to the receiving node.

19. An information transmission device, applied to a receiving node, comprising: a memory, a transceiver, and a processor;
wherein the memory is used to store a computer program; the transceiver is used to send and receive data under control of the processor; the processor is used to read the computer program in the memory and perform the following operations:
receiving, through the transceiver, a target signal transmitted by at least one sending node, wherein the target signal is used to indicate at least one of the following:
first identifier information of the sending node; or,
usage-related information of the target signal.

20. The device according to claim 19, wherein the target signal carries first information, or the target signal carries the first information and second information; wherein the first information is used to indicate the first identifier information of the sending node, and the second information is used to indicate the usage-related information of the target signal.

21. The device according to claim 20, wherein the processor executes the computer program in the memory to perform the following steps:
identifying the sending node and/or performing radio channel measurement, according to the target signal.

22. The device according to claim 20, wherein the second information includes at least one of the following:
access request information used to request access to the receiving node;
node switching indication information used to indicate the sending node or the receiving node to switch an access node;
service type information used to indicate a service type of the sending node; or,
radio resource reservation information used to indicate radio resources reserved by the sending node or radio resources allocated to the receiving node.

23. The device according to claim 20 or 22, wherein the processor executes the computer program in the memory to perform the following steps:
according to the second information, perform at least one of the following:
performing access processing on the sending node;
determining that the sending node switches an access node;
determining a service type of the sending node; or,
determining radio resources reserved by the sending node or radio resources allocated to the receiving node.

24. An information transmission device, applied to a sending node, comprising:
a first transmission unit used to transmit a target signal, wherein the target signal is used to indicate at least one of the following:
first identifier information of the sending node; or,
usage-related information of the target signal.

25. The device according to claim 24, wherein the target signal carries first information, and the first information is used to indicate the first identifier information of the sending node;
or, the target signal carries the first information and second information; wherein the first information is used to indicate the first identifier information of the sending node, and the second information is used to indicate the usage-related information of the target signal.

26. The device according to claim 25, wherein the first information includes part information of the first identifier information, or the first information includes all information of the first identifier information;
the first identifier information is used to indicate at least one of location information, node type or service type of the sending node.

27. The device according to claim 26, wherein each sending node corresponds to unique first identifier information.

28. The device according to claim 25, wherein the target signal is used to identify the sending node and/or used for radio channel measurement.

29. The device according to claim 25, wherein the second information includes at least one of the following:
access request information used to request access to a receiving node;
node switching indication information used to indicate the sending node or the receiving node to switch an access node;
service type information used to indicate a service type of the sending node; or,
radio resource reservation information used to indicate radio resources reserved by the sending node or radio resources allocated to the receiving node.

30. An information transmission device, applied to a receiving node, comprising:
a first receiving unit used to receive a target signal transmitted by at least one sending node, wherein the target signal is used to indicate at least one of the following:
first identifier information of the sending node; or,
usage-related information of the target signal.

31. The device according to claim 30, wherein the target signal carries first information, and the first information is used to indicate the first identifier information of the sending node;
or, the target signal carries the first information and second information; wherein the first information is used to indicate the first identifier information of the sending node, and the second information is used to indicate the usage-related information of the target signal.

32. The device according to claim 31, wherein the first information includes part information of the first identifier information, or the first information includes all information of the first identifier information;
the first identifier information is used to indicate at least one of location information, node type or service type of the sending node.

33. The device according to claim 32, wherein each sending node corresponds to unique first identifier information.

34. The device according to claim 31, wherein the device further includes:
a first processing unit used to, after the first receiving unit receives the target signal, identify the sending node and/or perform radio channel measurement, according to the target signal.

35. The device according to claim 31, wherein the second information includes at least one of the following:
access request information used to request access to a receiving node;
node switching indication information used to indicate the sending node or the receiving node to switch an access node;
service type information used to indicate a service type of the sending node; or,
radio resource reservation information used to indicate radio resources reserved by the sending node or radio resources allocated to the receiving node.

36. The device according to claim 31 or 35, wherein the device further includes:
a second processing unit used to, after the first receiving unit receives the target signal transmitted by the sending node, according to the second information, perform at least one of the following:
performing access processing on the sending node;
determining that the sending node switches an access node;
determining a service type of the sending node; or,
determining radio resources reserved by the sending node or radio resources allocated to the receiving node.

37. A processor-readable storage medium, comprising: program instructions stored thereon; wherein the program instructions are used to cause a processor to perform steps of the information transmission method according to any one of claims 1 to 7.

38. A processor-readable storage medium, comprising: program instructions stored thereon; wherein the program instructions are used to cause a processor to perform steps of the information transmission method according to any one of claims 8 to 14.
